# EUROPÄISCHE PATENTSCHRIFT

(11) **EP 3 268 640 B1**
(45) Veröffentlichungstag und Bekanntmachung des Hinweises auf die Patenterteilung: **17.10.2018**
(21) Anmeldenummer: 16706220.7
(22) Anmeldetag: 25.02.2016
(51) Int. Cl.: F16H 61/688

(54) **KRAFTFAHRZEUG MIT EINEM DOPPELKUPPLUNGSGETRIEBE**
MOTOR VEHICLE HAVING A DUAL CLUTCH TRANSMISSION
VÉHICULE AUTOMOBILE ÉQUIPÉ D'UNE BOÎTE DE VITESSES À DOUBLE EMBRAYAGE

(30) Priorität: 10.03.2015 DE 102015003407
(43) Veröffentlichungstag der Anmeldung: 17.01.2018
(73) Patentinhaber: Audi AG, 85045 Ingolstadt (DE)
(72) Erfinder: PROCHAZKA, Walter, 85120 Hepberg (DE); BRÜGGMANN, Daniel, 15712 Königs Wusterhausen (DE)
(86) Internationale Anmeldenummer: PCT/EP2016/053971
(87) Internationale Veröffentlichungsnummer: WO 2016/142181

(56) Entgegenhaltungen:
- EP-A2- 1 302 697
- DE-A1-102004 058 475
- DE-A1-102007 003 921
- US-A1- 2003 226 416
- US-A1- 2014 249 727

## Beschreibung

Die Erfindung betrifft ein Kraftfahrzeug mit einem Doppelkupplungsgetriebe nach dem Oberbegriff des Patentanspruches 1 sowie ein Verfahren zum Hochschalten auf einen Zielgang in einem solchen Kraftfahrzeug nach dem Patentanspruch 9.

Ein gattungsgemäßes Kraftfahrzeug weist eine Antriebseinheit, beispielhaft eine Brennkraftmaschine, auf, deren Kraftabgabewelle über zwei Trennkupplungen eines Doppelkupplungsgetriebes alternierend auf zwei zum Beispiel koaxial angeordnete Eingangswellen des Doppelkupplungsgetriebes abtreibbar ist. Mit den Eingangswellen können jeweils exemplarisch axial hintereinander angeordnete Teilgetriebe im Fahrbetrieb aktiviert oder deaktiviert werden. Den beiden Eingangswellen kann eine achsparallel angeordnete gemeinsame Abtriebswelle zugeordnet sein, die über ein Differenzial auf Fahrzeugräder abtreibt. Auf den Wellen des Doppelkupplungsgetriebes sind Fest- und Loszahnräder angeordnet, die unter Bildung von Gangstufen zu Zahnradsätzen zusammengefasst sind, in denen die Loszahnräder mittels Schaltkupplungen mit den Wellen kuppelbar sind. Von den beiden Teilgetrieben weist ein erstes Teilgetriebe die ungeraden Vorwärtsgänge und das zweite Teilgetriebe die geraden Vorwärtsgänge auf. Das Doppelkupplungsgetriebe ist als ein Automatikgetriebe mittels eines Getriebesteuergerätes ansteuerbar. Hierzu ist dem Getriebesteuergerät eine Ermittlungs-Einheit zugeordnet, mittels der in Abhängigkeit einer Vielzahl von Fahrbetriebsparametern ein Zielgang ermittelt wird. Zudem ist eine Schaltablaufsteuerungs-Einheit vorgesehen, mittels der ein Gangwechsel von einem aktuellen zum Zielgang steuerbar ist. Bei einer gängigen Schaltablaufsteuerung werden Gang-Hochschaltungen auch bei größeren Gangsprüngen stets sequentiell durchgeführt. Das heißt, dass bei einem Gangwechsel vom aktuellen Gang zu einem größeren Zielgang Einzel-Hochschaltungen durchgeführt werden, bei denen immer nur ein Gangsprung vom Gang eines Teilgetriebes zum nächsthöheren Gang des anderen Teilgetriebes erfolgt.

Eine solche sequentielle Hochschaltung wird in einer Fahrsituation vom Fahrer als unkomfortabel empfunden, bei der das Fahrzeug nach einer Beschleunigungsfahrt, zum Beispiel für einen Überhohlvorgang, in eine Konstantfahrt bei höherer Geschwindigkeit übergeht. In dieser Fahrsituation erfolgt die Beschleunigungsfahrt exemplarisch im vierten Gang. Nach Abschluss der Beschleunigungsfahrt wird auf zum Beispiel einen siebten Gang als Zielgang hochgeschaltet. Der Gangwechsel vom vierten Gang (aktueller Gang) zum siebten Gang (Zielgang) wird im Stand der Technik durch die sequentiellen Einzel-Hochschaltungen bewerkstelligt, bei denen aufeinanderfolgend zunächst vom vierten Gang (zweites Teilgetriebe) in den fünften Gang (erste Teilgetriebe), anschließend vom fünften Gang in den sechsten Gang (zweites Teilgetriebe) und danach vom sechsten in den siebten Gang (erste Teilgetriebe) hochgeschaltet wird. Durch diese sequentielle Abfolge von Einzel-Hochschaltungen wird bei größeren Gangsprüngen (vom aktuellen Gang in den Zielgang) der Zielgang erst zeitverzögert nach längerer Hochschalt-Dauer erreicht werden. Die Einzel-Hochschaltungen in den jeweils nächsthöheren Gang können dabei vom Fahrer als unangenehm oder unnötig wahrgenommen werden, da die tatsächliche Fahreraktion (das heißt Einlegen eines Zielgangs mittels einer Schaltwippe/Wählhebel oder Fahrstrategie/Fahrpedal) nicht mehr gleichzeitig mit der Fahrzeugreaktion, sondern vielmehr zeitverzögert erfolgt.

Aus der DE 10 2007 003 921 A1 ist ein Verfahren zur Steuerung eines Automatikgetriebes bekannt, das ebenfalls als ein Doppelkupplungsgetriebe ausgebildet ist. Die Getriebesteuerung ist so ausgelegt, dass neben der oben definierten Einzel-Hochschaltung auch eine Mehrfach-Hochschaltung erfolgen kann. Die Mehrfach-Hochschaltung erfolgt jeweils nur in ungeradzahligen Gängen oder in geradzahligen Gängen, das heißt nicht zwischen Gängen unterschiedlicher Teilgetriebe, sondern im selben Teilgetriebe, zum Beispiel eine Hochschaltung vom vierten Gang (zweites Teilgetriebe) in den sechsten Gang (zweites Teilgetriebe), wobei der fünfte Gang (erstes Teilgetriebe) als Zwischengang übersprungen wird. Diese Mehrfach-Hochschaltung ermöglicht einen Notbetrieb des Doppelkupplungsgetriebes, bei dem ein Teilgetriebe schaltbar ist und das andere Teilgetriebe aufgrund einer Störung nicht mehr schaltbar ist. Dadurch kann das Fahrzeug sicher bis zur nächsten Werkstatt gefahren werden.

Die Aufgabe der Erfindung besteht darin, ein Kraftfahrzeug mit einem Doppelkupplungsgetriebe bereitzustellen, bei dem Gang-Hochschaltungen ohne Komforteinbußen für den Fahrer ermöglicht sind.

Die Aufgabe ist durch die Merkmale des Patentanspruches 1 oder des Patentanspruches 9 gelöst. Bevorzugte Weiterbildungen der Erfindung sind in den Unteransprüchen offenbart.

Gemäß dem kennzeichnenden Teil des Patentanspruches 1 weist die Schaltablaufsteuerungs-Einheit des Getriebesteuergerätes ein zusätzliches, als Programmbaustein ausgeführtes Freigabemodul auf. Mit dem Freigabemodul ist eine Direkt-Hochschaltung freigebbar, und zwar für den Fall, dass zwischen dem aktuellen Gang und einem größeren Zielgang zumindest zwei Zwischengänge liegen. Bei der erfindungsgemäßen Direkt-Hochschaltung werden nicht mehr Einzel-Hochschaltungen durchgeführt, sondern sind eine Anzahl von Zwischengängen überspringbar. Die Anzahl von zu überspringenden Zwischengängen ist dabei zwei oder ein Vielfaches von zwei. Im Unterschied zur obigen DE 10 2007 003 921 A1 erfolgt somit bei der Direkt-Hochschaltung der Gangsprung vom Gang eines Teilgetriebes in einen Gang des anderen Teilgetriebes. Im Gegensatz zur DE 10 2007 003 921 A1 erfolgt die Schaltung ohne Unterbrechung des Kraftflusses, das heißt mit permanent geschlossenem Antriebsstrang über mindesten eine Fahrkupplung.

Mit der Erfindung wird erreicht, dass bei größeren Gangsprüngen mit zumindest zwei Zwischengängen direkt auf den Zielgang oder zumindest mit - im Vergleich zum Stand der Technik - reduzierten Schaltvorgängen auf den Zielgang hochgeschaltet wird. Der Zielgang ist daher nach einer entsprechenden Fahreraktion mit - im Vergleich zum Stand der Technik - weniger Zeitverzögerung einlegbar. Zudem können auch große Gangsprünge mit nur einer bzw. maximal zwei Hochschaltungen durchgeführt werden. Der Zielgang ist daher deutlich schneller erreicht, so dass die Getriebereaktion direkt mit einer Fahrerreaktion in Zusammenhang bringbar ist.

Für den Fall, dass zwischen dem aktuellen Gang und einem größeren Zielgang nicht zwei (oder eine Vielzahl davon), sondern lediglich ein Zwischengang liegt, sperrt das in der Schaltablaufsteuerungs-Einheit integrierte Freigabemodul die Direkt-Hochschaltung. In diesem Fall führt die Schaltablaufsteuerungs-Einheit den Gangwechsel vom aktuellen Gang zum Zielgang mit zumindest einer Einzel-Hochschaltung durch, bei der immer nur ein Gangsprung zum nächsthöheren Gang durchgeführt wird, bis der Zielgang erreicht ist.

Ist ein direkter Gangwechsel möglich (bei einer dreifachen oder fünffachen Hochschaltung), erfolgt der Gangwechsel direkt auf den Zielgang. Bei einer indirekten Mehrfach-Hochschaltung wird dagegen der Schaltvorgang in zum Beispiel eine Einfach-Hochschaltung und eine Mehrfach-Direkthochschaltung aufgeteilt. Der Schaltablauf weist in diesem Fall zumindest eine Direkt-Hochschaltung in Kombination mit zumindest einer Einzel-Hochschaltung auf.

Bei einem Gangwechsel mit sehr großem Gangsprung können erfindungsgemäß lediglich ein bzw. maximal zwei Hochschaltungen durchgeführt werden (das heißt eine Direkt-Hochschaltung gegebenenfalls in Kombination mit einer Einzel-Hochschaltung). Auf diese Weise ist, wie bereits oben erwähnt, der Zielgang deutlich schneller erreicht.

In einer technischen Ausführung wird die Direkt-Hochschaltung in Abhängigkeit von einem, vom Fahrer auswählbaren Fahrprogramm, etwa ein Automatikmodus oder ein Manuellmodus, und/oder vom durchzuführenden Gangwechsel vom Freigabemodul freigegeben oder gesperrt. Auf diese Weise wird für jeden Schaltvorgang separat das Hochschaltmodul aktiviert. Zusätzlich kann für jeden durchzuführenden (beabsichtigten) Gangwechsel eine minimale Antriebsdrehzahl festgelegt werden.

In einer bevorzugten Ausführungsform weist das Doppelkupplungsgetriebe insgesamt sieben Vorwärtsgänge, von denen der erste, dritte, fünfte und siebte Gang im ersten Teilgetriebe schaltbar sind und der zweite, vierte und sechste Gang im zweiten Teilgetriebe schaltbar sind.

Die Erfindung ist speziell auf eine Fahrsituation anwendbar, bei der eine Beschleunigungsfahrt, zum Beispiel nach einem Ampelstart oder bei einem Überholvorgang, in eine anschließende Konstantfahrt übergeht. Der Übergang von der Beschleunigungsfahrt in die Konstantfahrt ist mit einem Hochschaltvorgang verbunden, bei dem das Doppelkupplungsgetriebe zum Beispiel vom vierten Gang in den zum Beispiel den siebten Gang hochschaltet. In Anwendung der Erfindung erfolgt hier die Direkt-Hochschaltung, bei der der fünfte und sechste Zwischengang übersprungen wird und direkt der siebte Gang eingelegt wird.

Die Art und Weise, in welcher Abfolge die erfindungsgemäße Direkt-Hochschaltung in einen Gesamt-Hochschaltvorgang eingebunden wird, ist variabel und wird von der Schaltablaufsteuerungs-Einheit festgelegt. Beispielhaft kann der Gesamt-Hochschaltvorgang in zwei Direkt-Hochschaltungen oder in eine Kombination aus einer Direkt-Hochschaltung und einer herkömmlichen Einzel-Hochschaltung aufgeteilt sein.

Zum Beispiel kann ein 2-6-Hochschaltvorgang in eine Einzel-Hochschaltung, in der vom zweiten Gang (zweites Teilgetriebe) in den dritten Gang (erstes Teilgetriebe) hochgeschaltet wird, und in eine Direkt-Hochschaltung aufgeteilt sein, in der vom dritten Gang (erstes Teilgetriebe) direkt in den Zielgang (das heißt den sechsten Gang im zweiten Teilgetriebe) hochgeschaltet wird.

Alternativ dazu kann die kann ein 2-6-Hochschaltvorgang in eine Direkt-Hochschaltung, in der vom zweiten Gang (zweites Teilgetriebe) in den fünften Gang (erstes Teilgetriebe) hochgeschaltet wird, und in eine Einzelhochschaltung aufgeteilt sein, in der vom fünften Gang (erstes Teilgetriebe) in den Zielgang (das heißt den sechsten Gang im ersten Teilgetriebe) hochgeschaltet wird.

Der Schaltablauf der erfindungsgemäßen Direkt-Hochschaltung ist grundsätzlich vergleichbar mit dem einer Einfach-Hochschaltung. Das heißt, dass nach dem Einlegen des Zielgangs die kommende Kupplung auf ein Anlegemoment befüllt wird und anschließend das Moment auf die kommende Kupplung übergeben wird (Momentenüberschneidung). In der folgenden Phase wird die Motordrehzahl über eine vom Getriebesteuergerät geforderte Motormomentenreduktion auf die Drehzahl des Zielganges überführt (Drehzahlüberführung). Die Zeiten für die Momentenüberschneidung und die Drehzahlüberführung können abhängig vom Gangsprung (dreifach oder fünffach) und dem aktuellen Fahrzeugzustand, zum Beispiel Fahrerwunsch/Motormoment oder Zielgang, variiert werden. Die Regelung der Kupplungsmomente und die Berechnung der Motormomentenreduktion erfolgt dabei wie bei einer gängigen Einfach-Hochschaltung.

Wie oben erwähnt, erfolgt in der DE 10 2007 003 921 A1 eine Mehrfach-Hochschaltung ausschließlich im selben Teilgetriebe (zum Beispiel vom vierten Gang in den sechsten Gang), und zwar ohne Zwischen-Aktivierung des anderen Teilgetriebes bei komplett geöffnetem Antriebsstrang (das heißt beide Kupplungen sind gleichzeitig geöffnet). Im Unterschied dazu erfolgt erfindungsgemäß für den Fall, dass sowohl der aktuelle Gang als auch der Zielgang dem gleichen Teilgetriebe (zum Beispiel das erste Teilgetriebe) zugeordnet sind, zumindest eine Direkt-Hochschaltung in einen Gang des anderen Teilgetriebes (zum Beispiel das zweite Teilgetriebe), der unmittelbar unter dem Zielgang liegt. Anschließend erfolgt eine herkömmliche Einfach-Hochschaltung auf den Zielgang. Im Unterschied zur obigen DE 10 2007 003 921 A1 wird somit der Gangwechsel in einen höheren Zielgang nicht ohne, sondern mit Zwischen-Aktivierung des anderen Teilgetriebes ausgeführt. Im Gegensatz zur DE 10 2007 003 921 A1 erfolgt die Schaltung ohne Unterbrechung des Kraftflusses, das heißt mit permanent geschlossenem Antriebsstrang über mindesten eine Fahrkupplung.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Fig. 1: ein schematisches Blockschaltbild eines Doppelkupplungsgetriebes für ein Kraftfahrzeug mit zugeordneter Getriebesteuerung; und
- Fig. 2: Diagramme, die beispielhaft einen 4-7-Hochschaltvorgang veranschaulichen, der mit einer einer erfindungsgemäßen Direkt-Hochschaltung durchgeführt wird.

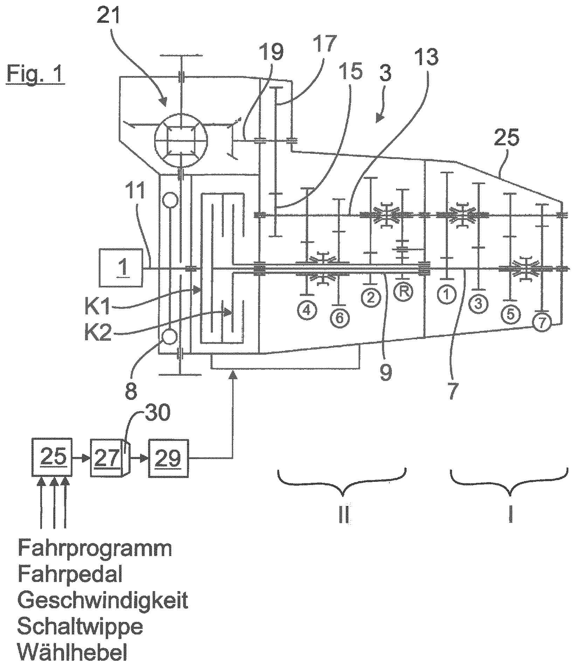

In der Fig. 1 weist ein Antriebsaggregat eines Kraftfahrzeugs im Wesentlichen eine Brennkraftmaschine 1 und ein Doppelkupplungsgetriebe 3 auf. Das Doppelkupplungsgetriebe 3 weist zwei Eingangswellen 7, 9 auf, die koaxial angeordnet sind und die über zwei hydraulisch betätigbare Lamellenkupplungen K1, K2 alternierend mit der Motor-Kurbelwelle 11 der Brennkraftmaschine momentübertragend verbindbar sind, und zwar über einen vorgeschalteten Drehschwingungsdämpfer 8. Die Eingangswelle 9 ist in der Fig. 1 eine Hohlwelle, innerhalb der koaxial die Eingangswelle 7 angeordnet ist.

Das Doppelkupplungsgetriebe 3 umfasst hier beispielhaft insgesamt sieben Vorwärtsgänge und einen Rückwärtsgang, die durch entsprechende Zahnradsätze mit jeweils einem Loszahnrad und einem Festzahnrad realisiert sind, die in bekannter Weise über Schaltkupplungen (das heißt Doppelsynchronkupplungen, hier Ein- oder Mehrfachsynchronisierungen) schaltbar sind und in zwei Teilgetriebe I und II unterteilt sind.

Das Teilgetriebe II weist dabei die geraden Vorwärtsgänge (das heißt zweiter Gang, vierter Gang, sechster Gang) sowie den Rückwärtsgang R auf, die über die hohle Eingangswelle 9 und mittels der zweiten Trennkupplung K2 aktivierbar sind. Das Teilgetriebe I weist die ungeraden Vorwärtsgänge (das heißt erster Gang, dritter Gang, fünfter Gang und siebter Gang) auf, die über die erste Eingangswelle 7 und mittels der ersten Trennkupplung K1 aktivierbar sind. Die abtreibenden Zahnräder der, die Gangstufen bildenden Zahnradsätze sind allesamt auf einer gemeinsamen, achsparallelen Abtriebswelle 13 angeordnet. Die Abtriebswelle 13 treibt über eine Zahnradstufe mit Stirnzahnrädern 15, 17 die Antriebswelle eines Achsdifferenzials 21 an.

Das Doppelkupplungsgetriebe 3 ist als ein Automatikgetriebe mittels eines Getriebesteuergeräts 23 ansteuerbar. Die Softwarestruktur des Getriebesteuergeräts 23 ist in der Fig. 1 im Hinblick auf ein einfaches Verständnis der Erfindung lediglich grob vereinfacht nur insoweit dargestellt, als es für das Verständnis der Erfindung erforderlich ist. Demzufolge weist das Getriebesteuergerät 23 eine Fahrstrategie-Einheit 25 auf, mittels der im Fahrbetrieb ein Zielgang in Abhängigkeit von einer Vielzahl von Eingangsparametern ermittelt wird, etwa dem Fahrpedal, der Fahrgeschwindigkeit der Schaltwippe, dem Wählhebel, etc. Der so ermittelte Zielgang wird zu einer Schaltablaufsteuerungs-Einheit 27 geleitet, die den aktuellen Gang und den nächsten Gang berechnet. In der Schaltablaufsteuerungs-Einheit 27 ermittelt ein Freigabemodul 30, ob/ob nicht eine später beschriebene Mehrfach-Hochschaltung (das heißt Direkt-Hochschaltung) freigebbar ist. Zudem steuert die Schaltablaufsteuerungs-Einheit 27 eine Aufteilung des Hochschaltvorgangs in Einfach-/Mehrfach-Hochschaltungen.

Die Schaltablaufsteuerungs-Einheit 27 ist in Signalverbindung mit einem Hochschaltmodul 29, das u.a. die Getriebe-/Kupplungsaktorik zur Durchführung eines Hochschaltvorgangs ansteuert. Das Hochschaltmodul 29 steuert einen Gangwechsel vom aktuellen auf den nächsten Gang. Zudem kann das Hochschaltmodul 29 gegebenenfalls mehrfach aufgerufen werden, zum Beispiel bei einer Aufteilung in Einfach-/Direkt-Hochschaltungen.

Wie oben erwähnt, weist die Schaltablaufsteuerungs-Einheit 27 ein Freigabemodul 30 auf, mit dem eine Direkt-Hochschaltung freigebbar ist. Die Direkt-Hochschaltung wird dann freigegeben, wenn zwischen dem aktuellen Gang und einem größeren Zielgang zumindest zwei Zwischengänge liegen. Bei der Direkt-Hochschaltung werden nicht mehr Einzel-Hochschaltungen durchgeführt, sondern sind vielmehr eine Anzahl von Zwischengängen überspringbar. Die Anzahl von zu überspringenden Zwischengängen ist dabei zwei oder ein Vielfaches von zwei.

Die Freigabe einer solchen Direkt-Hochschaltung erfolgt zudem in Abhängigkeit vom nutzerseitig gewählten Fahrprogramm und des durchzuführenden Gangwechsels (zum Beispiel vom ersten zum vierten Gang, vom zweiten zum fünften Gang, etc.) und wird für jeden Schaltvorgang separat aktiviert. Bei nicht freigegebener Direkt-Hochschaltung wird ein Hochschaltvorgang durchgeführt, bei dem mit herkömmlichen Einzel-Hochschaltungen bis zum Zielgang hochgeschaltet wird. Unter einer Einzel-Hochschaltung ist erfindungsgemäß zu verstehen, dass stets immer nur ein Gangsprung von einem Gang zum nächsthöheren Gang durchgeführt wird, das heißt keine Zwischengänge übersprungen werden.

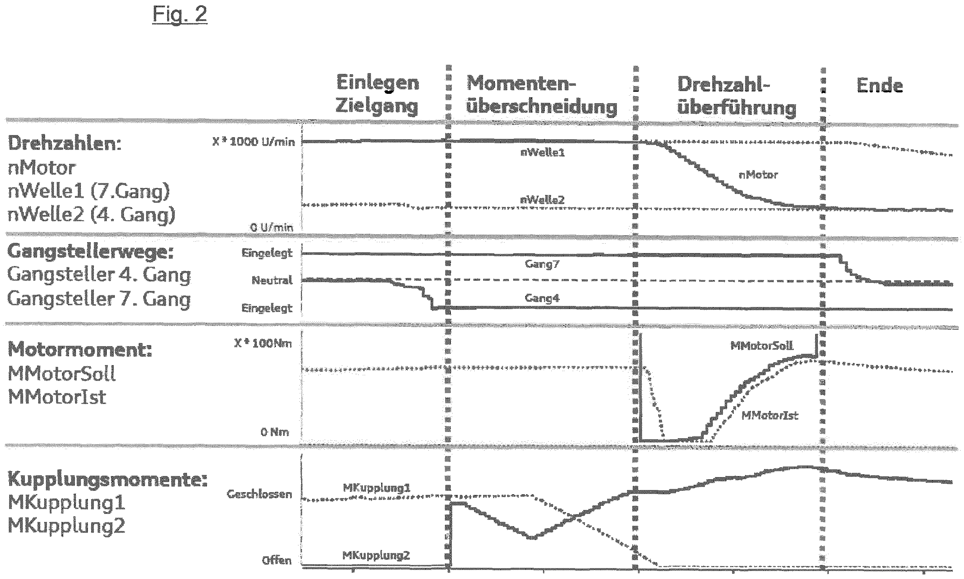

In der Fig. 2 sind Diagramme gezeigt, anhand derer beispielhaft ein 4-7-Hochschaltvorgang veranschaulicht ist, der mit einer erfindungsgemäßen Direkt-Hochschaltung vom aktuellen vierten Gang in den siebten Gang (Zielgang) durchgeführt wird. Die in der Fig. 2 angedeutete Schaltablaufsteuerung ist grundsätzlich vergleichbar mit dem einer herkömmlichen Einfach-Hochschaltung. Das heißt, dass nach dem Einlegen des Zielgangs die kommende Kupplung auf ein Anlegemoment befüllt wird und anschließend das Moment auf die kommende Kupplung übergeben wird (Momentenüberschneidung). In der folgenden Phase wird die Motordrehzahl über eine vom Getriebesteuergerät geforderte Motormomentenreduktion auf die Drehzahl des Zielganges überführt (Drehzahlüberführung). Die Zeiten für die Momentenüberschneidung und die Drehzahlüberführung können abhängig vom Gangsprung (dreifach oder fünffach) und dem aktuellen Fahrzeugzustand, zum Beispiel Fahrerwunsch/Motormoment oder Zielgang, variiert werden. Die Regelung der Kupplungsmomente und die Berechnung der Motormomentenreduktion erfolgt dabei wie bei einer gängigen Einfach-Hochschaltung. Der Ablauf einer gängigen Einfach-Hochschaltung im Schub kann auch auf eine Mehrfach-Hochschaltung im Schub übertragen werden.

## Patentansprüche

1. Kraftfahrzeug mit einer Antriebseinheit (1), deren Kraftabgabewelle (11) über zwei Trennkupplungen (K1, K2) einer Doppelkupplung alternierend auf ein erstes Teilgetriebe (I) oder ein zweites Teilgetriebe (II) eines Doppelkupplungsgetriebes (3) abtreibt, wobei das erste Teilgetriebe (I) die ungeraden Vorwärtsgänge und das zweite Teilgetriebe (II) die geraden Vorwärtsgänge aufweist, und mit einem Getriebesteuergerät (23), das eine Fahrstrategie-Einheit (25) zur Ermittlung eines Zielgangs in Abhängigkeit von Eingangsparametern und eine Schaltablaufsteuerungs-Einheit (27) aufweist, mit der ein Gangwechsel vom aktuellen Gang zum Zielgang steuerbar ist, **dadurch gekennzeichnet, dass** die Schaltablaufsteuerungs-Einheit (27) ein Freigabemodul (30) aufweist, das für den Fall, dass zwischen dem aktuellen Gang und einem größeren Zielgang zumindest zwei Zwischengänge liegen, eine Direkt-Hochschaltung freigibt, mittels der eine Anzahl von Zwischengängen überspringbar sind, wobei die Anzahl von Zwischengängen zwei oder ein Vielfaches von zwei ist.

2. Kraftfahrzeug nach Anspruch 1, **dadurch gekennzeichnet, dass** bei nicht freigegebener Direkt-Hochschaltung die Schaltablaufsteuerungs-Einheit (27) bei einem Gangwechsel vom aktuellen Gang zu einem größeren Zielgang zumindest eine Einzel-Hochschaltung durchführt, bei der immer ein Gangsprung zum nächsthöheren Gang durchführbar ist.

3. Kraftfahrzeug nach Anspruch 1 oder 2, **dadurch gekennzeichnet, dass** der Schaltablauf bei einem Gangwechsel zumindest eine Direkt-Hochschaltung in Kombination mit zumindest einer Einzel-Hochschaltung aufweist.

4. Kraftfahrzeug nach einem der Ansprüche 1, 2 oder 3, **dadurch gekennzeichnet, dass** die Schaltablaufsteuerungs-Einheit (27) ein vom Fahrer auswählbares Fahrprogramm, etwa einen Automatikmodus oder einen Manuellmodus, und/oder den beabsichtigten Gangwechsel erfasst, und dass in Abhängigkeit vom beabsichtigten Gangwechsel und/oder vom Fahrprogramm die Direkt-Hochschaltung durchführbar ist oder nicht durchführbar ist.

5. Kraftfahrzeug nach einem der vorhergehenden Ansprüche, **dadurch gekennzeichnet, dass** das Doppelkupplungsgetriebe (3) insgesamt sieben Vorwärtsgänge aufweist, von denen der erste, dritte, fünfte und siebte Gang im ersten Teilgetriebe (I) schaltbar sind und der zweite, vierte und sechste Gang im zweiten Teilgetriebe (II) schaltbar sind.

6. Kraftfahrzeug nach Anspruch 5, **dadurch gekennzeichnet, dass** im Fahrbetrieb eine Beschleunigungsfahrt mit anschließender Konstantfahrt mit einem Hochschaltvorgang erfolgt, bei dem das Doppelkupplungsgetriebe (3) vom vierten Gang als aktueller Gang auf den siebten Gang als Zielgang hochschaltbar ist, und dass der Hochschaltvorgang mit einer Direkt-Hochschaltung durchführbar ist, bei der der fünfte und sechste Zwischengang überspringbar ist und direkt der siebte Gang einlegbar ist.

7. Kraftfahrzeug nach einem der vorhergehenden Ansprüche, **dadurch gekennzeichnet, dass** für den Fall, dass sowohl der aktuelle Gang als auch der Zielgang dem einen Teilgetriebe (I) zugeordnet sind, der Hochschaltvorgang aufgeteilt ist in zumindest eine Direkt-Hochschaltung vom aktuellen Gang in einen Zwischengang des anderen Teilgetriebes (II), der unmittelbar unter dem Zielgang liegt, und in eine Einfach-Hochschaltung auf den Zielgang.

8. Kraftfahrzeug nach einem der vorhergehenden Ansprüche, **dadurch gekennzeichnet, dass** eine Direkt-Hochschaltung in den höchsten Vorwärtsgang mittels einer Schaltwippe oder einer Tip-Aktion am Wählhebel auslösbar ist.

9. Verfahren zum Hochschalten auf einen Zielgang in einem Kraftfahrzeug nach einem der vorhergehenden Ansprüche, bei dem für den Fall, dass zwischen dem aktuellen Gang und dem größeren Zielgang zumindest zwei Zwischengänge liegen, eine Direkt-Hochschaltung erfolgt, bei der eine Anzahl von Zwischengängen übersprungen werden, wobei die Anzahl bei zwei oder einem Vielfachen davon liegt.

## Claims

1. Motor vehicle with a power unit (1), the output shaft (11) of which outputs via two disconnect couplings (K1, K2) of a dual clutch alternatingly onto a first part transmission (I) or a second part transmission (II) of a dual clutch transmission (3), wherein the first part transmission (I) has the odd-numbered forward gears and the second part transmission (II) has the even-numbered forward gears, and with a transmission control device (23), which has a drive strategy unit (25) for detecting a target gear depending on input parameters and a gear change sequence control unit (27), with which a gear change from the actual gear to the target gear can be controlled, **characterised in that** the gear change sequence control unit (27) has a release module (30) which, in the case that there lie between the actual gear and a larger target gear at least two interim gears, releases a direct upshift, by means of which a number of interim gears can be bypassed, wherein said number of interim gears is two or a factor of two.

2. Motor vehicle according to claim 1, **characterised in that** in the case of direct upshift not being released the gear change sequence control unit (27) at a change of gear from the actual gear to a larger target gear carries out at least one individual upshift, in which a gear jump to the next higher gear can always be carried out.

3. Motor vehicle according to claim 1 or 2, **characterised in that** the gear change sequence at a change of gear has at least one direct upshift in combination with at least one individual upshift.

4. Motor vehicle according to one of claims 1, 2 or 3, **characterised in that** the gear change sequence control unit (27) includes a drive program which can be selected by the driver, e.g. an automatic mode or a manual mode, and/or the intended change of gear, and that depending on the intended change of gear and/or the driving program, the direct gear upshift can be carried out or cannot be carried out.

5. Motor vehicle according to one of the preceding claims, **characterised in that** the deal clutch transmission (3) has in total seven forward gears, of which the first, third, fifth and seventh gear can be shifted in the first part transmission (I) and the second, fourth and six gear can be shifted in the second part transmission (II).

6. Motor vehicle according to claim 5, **characterised in that** in drive operation an accelerating drive with subsequent constant drive is achieved with a upshift procedure, in which the dual clutch transmission (3) can be shifted up from the fourth gear as actual gear to the seventh gear as target gear, and that the upshift procedure can be carried out with a direct upshift, in which the fifth and sixth interim gear can be bypassed and the seventh gear can be directly engaged.

7. Motor vehicle according to one of the preceding claims, **characterised in that** in the case that both the actual gear as well as the target gear is assigned to the one part transmission (I), the upshift procedure is divided into at least one direct upshift from the actual gear into an interim gear of the other part transmission (II), which lies directly below the target gear, and in one individual upshift to the target gear.

8. Motor vehicle according to one of the preceding claims, **characterised in that** a direct upshift into the highest forwards gear can be effected by means of a shift paddle or a tap-action on the selection lever.

9. Method for upshifting to a target gear in a motor vehicle according to one of the preceding claims, in which in the case that there lie between the actual gear and the larger target gear at least two interim gears, there takes place a direct upshift, in which a number of interim gears is bypassed, wherein said number is two or a factor of two.

## Revendications

1. Véhicule automobile avec une unité de commande (1), dont l'arbre de sortie (11) passe via deux embrayages de séparation (K1, K2) d'un embrayage double en alternance sur une première boîte de vitesses partielle (I) ou une seconde boîte de vitesses partielle (II) d'une boîte de vitesses à embrayage double (3), dans lequel la première boîte de vitesses partielle (I) présente les marche avant impaires et la seconde boîte de vitesses partielle (II) les marche avant paires, et un appareil de commande de boîtes de vitesses (23) qui présente une unité de stratégie de marche (25) pour obtenir une vitesse cible en fonction de paramètres d'entrée et une unité de commande de changement de rapport (27) avec laquelle peut être commandé un changement de vitesses de la vitesse en cours à la vitesse cible, **caractérisé en ce que** l'unité de commande de changement de rapport (27) présente un module de libération (30) qui, dans le cas où au moins deux vitesses intermédiaires se trouvent entre la vitesse en cours et une vitesse cible plus élevée, libère un passage direct à la vitesse supérieure, au moyen duquel un certain nombre de vitesses intermédiaires peut être sauté, dans lequel le nombre de vitesses intermédiaires est de deux ou d'un multiple de deux.

2. Véhicule automobile selon la revendication 1, **caractérisé en ce que**, dans le cas où le passage direct à la vitesse supérieure n'est pas libéré, l'unité de commande de changement de rapport (27) réalise lors d'un changement de vitesses de la vitesse en cours à une vitesse plus élevée au moins un passage unique à la vitesse supérieure, dans lequel un saut de vitesse à la vitesse supérieure la plus proche peut toujours être effectué.

3. Véhicule automobile selon la revendication 1 ou 2, **caractérisé en ce que** le changement de rapport présente lors d'un changement de vitesse au moins un passage direct à la vitesse supérieure en combinaison avec au moins un passage unique à la vitesse supérieure.

4. Véhicule automobile selon l'une quelconque des revendications 1, 2 ou 3, **caractérisé en ce que** l'unité de commande de changement de rapport (27) détecte un programme de marche sélectionnable par le conducteur, en mode automatique ou en mode manuel, et/ou le changement de vitesse voulu et, en fonction du changement de vitesse voulu et/ou du programme de marche, le passage direct à une vitesse supérieure peut être réalisé ou ne pas être réalisé.

5. Véhicule automobile selon l'une quelconque des revendications précédentes, **caractérisé en ce que** la boîte de vitesses à embrayage double (3) présente au total sept marche avant parmi lesquelles la première, la troisième, la cinquième et la septième vitesse peut être passées dans la première boîte de vitesses partielle (I) et la deuxième, la quatrième et la sixième vitesse dans la seconde boîte de vitesses partielle (II).

6. Véhicule automobile selon la revendication 5, **caractérisé en ce que**, en cours de marche, un trajet à vitesse accélérée suivi d'un trajet à vitesse constante se fait avec une opération de passage à une vitesse supérieure, dans laquelle la boîte de vitesses à embrayage double (3) passe en vitesse supérieure de la quatrième vitesse comme vitesse en cours à la septième vitesse comme vitesse cible, et l'opération de passage à la vitesse supérieure peut être réalisée par un passage direct à la vitesse supérieure, dans lequel la cinquième et la sixième vitesse intermédiaire peuvent être sautées et la septième vitesse peut être mise en place directement.

7. Véhicule automobile selon l'une quelconque des revendications précédentes, **caractérisé en ce que**, dans le cas où autant la vitesse en cours que la vitesse cible sont affectées à une boîte de vitesses partielle (I), l'opération de passage à la vitesse supérieure est divisée en au moins un passage direct à la vitesse supérieure dans une vitesse intermédiaire de l'autre boîte de vitesses partielle (II), qui se situe directement en dessous de la vitesse cible, et en un passage unique à la vitesse supérieure à la vitesse cible.

8. Véhicule automobile selon l'une quelconque des revendications précédentes, **caractérisé en ce qu'**un passage direct à la vitesse supérieure dans la marche avant la plus élevée peut être déclenchée au moyen d'un bouton à bascule de commutation ou d'une action tip sur le levier sélecteur.

9. Procédé pour passer à une vitesse supérieure à une vitesse cible dans un véhicule automobile selon l'une quelconque des revendications précédentes, dans lequel, dans le cas où il y a entre la vitesse en cours et la vitesse cible supérieure au moins deux vitesses intermédiaires, il se produit un passage direct à la vitesse supérieure dans lequel un certain nombre de vitesses intermédiaires est sautée, dans lequel le nombre est de deux ou d'un multiple de deux.
